# EUROPÄISCHE PATENTANMELDUNG

(11) **EP 0 622 939 A1**
(43) Veröffentlichungstag der Anmeldung: **02.11.1994**
(21) Anmeldenummer: 94105927.1
(22) Anmeldetag: 16.04.1994
(51) Int. Cl.: H04M 3/54

(54) **Verfahren zur Anruflenkung und Fernmeldeendgeräte dafür**

(30) Priorität: 29.04.1993 DE 4314113
(71) Anmelder: Alcatel SEL Aktiengesellschaft, D-70435 Stuttgart (DE)
(72) Erfinder: Wizgall, Manfred, Dr., D-70191 Stuttgart (DE); Kuttner, Axel, D-70469 Stuttgart (DE)
(74) Vertreter: Brose, Gerhard

(57) **Zusammenfassung**

Alle Anrufe für bestimmte Teilnehmer werden an überregionale Zentrale gemeldet und von dort nach vorgegebenen Kriterien (Tageszeit, regionale Herkunft) an verschiedene Endgeräte geleitet.

Dem angerufenen Teilnehmer (B) wird Art und Herkunft eines Verbindungswunsches angezeigt. Dieser wählt einzelfallbezogen ein bestimmtes Endgerät (B,B',B'') aus, zu dem hin der Anruf geleitet wird oder er weist den Anruf zurück. Eine Lösungsmöglichkeit besteht in einem Endgerät nach Art eines Pagers, jedoch mit Rückmeldemöglichkeit; kombinierbar mit Sprachendgerät.

## Beschreibung

Die Erfindung betrifft ein Verfahren zur Anruflenkung nach dem Oberbegriff des Anspruchs 1 und ein Fernmeldeendgerät.

Ein solches Verfahren wird beispielsweise bei der Deutschen Bundespost beim "Service 130" verwendet. Dieser Dienst wird unter Zuhilfenahme von Einrichtungen abgewickelt, die mit dem Begriff "Intelligent Network" (IN) verbunden sind. Dieser Dienst wird durch Wahl der Ausscheidungsziffernfolge 130, gegebenenfalls nach vorangehender Wahl der Ausscheidungsziffer für die Fernebene, erreicht und hat zunächst zur Folge, daß die Signalisierung zu einem "Service Control Point" (SCP) weitergegeben wird, während der Ruf selbst in der dem rufenden Teilnehmer nächstliegenden Vermittlungsstelle angehalten wird, die diesen Dienst bieten kann. Diese Vermittlungsstelle wird als Service Switching Point (SSP) bezeichnet. Im Service Control Point wird für jeden diesen Dienst nutzenden Teilnehmer, der durch eine Teilnehmernummer gekennzeichnet ist, festgelegt, wohin der jeweilige Anruf weiter zu vermitteln ist. Diese Festlegung erfolgt aufgrund von Vorgaben des gerufenen Teilnehmers, die von diesem auch geändert werden können. Die Vorgabe kann beispielsweise dahin gehen, daß außerhalb der üblichen Geschäftszeiten, die natürlich auch vorzugeben sind, die Anrufe zu einem zentralen Anrufbeantworter zu vermitteln sind, wogegen sie während dieser Geschäftszeiten zu derjenigen Außenstelle des gerufenen Teilnehmers zu vermitteln sind, die dem Anrufer am nächsten liegt. Dies wird aus der ebenfalls an den Service Control Point signalisierten Teilnehmernummer des Anrufers ermittelt. Diejenige Rufnummer, an die im konkreten Einzelfall zu vermitteln ist, wird an den Service Switching Point zurück signalisiert, woraufhin der angehaltene Vermittlungsvorgang durch Vermittlung des Anrufs zu der so festgelegten Rufnummer zu Ende geführt wird. Daß beim genannten Service 130 an sich die Gebührenübernahme durch den Angerufenen im Vordergrund steht, ist im vorliegenden Fall unerheblich.

Vergleichbare Dienste werden auch von anderen Netzbetreibern in anderen Ländern oder auch von "Service Providern" angeboten. Dem Fachmann auf dem Gebiet der Vermittlungstechnik sind diese Dienste, ebenso wie das Intelligent Network, auf dem sie aufbauen, bekannt.

Diese Dienste sind nur für eine beschränkte Teilnehmerzahl auf der Seite der Angerufenen möglich. Außerdem sind sie recht starr und bieten nur begrenzte Möglichkeiten.

Erfindungsgemäß wird deshalb das genannte Verfahren in der Ausgestaltung nach der Lehre des Anspruchs 1 durchgeführt. Weiter wird ein Fernmeldeendgerät, nach Anspruch 4, angegeben, mit dessen Hilfe ein Teilnehmer den ihn rufenden Teilnehmern diesen Dienst nutzbar machen kann.

Der Grundgedanke liegt darin, den angerufenen Teilnehmer selbst die Funktion des Service Control Points übernehmen und ihn einzelfallbezogen, also wenn bereits ein Verbindungswunsch (Anruf) vorliegt, ein bestimmtes Endgerät auswählen zu lassen, zu dem hin dann der Anruf geleitet wird, nachdem dies dem Service Switching Point zurücksignalisiert wurde.

Vorteilhafte Ausgestaltungen sind den Unteransprüchen zu entnehmen.

Insbesondere wird dem angerufenen Teilnehmer zu diesem Zweck die Herkunft des Verbindungswunsches (Rufnummer des Anrufers oder dessen Name) und möglicherweise die Art des Verbindungswunsches (Gespräch, Fax, Bildtelefongespräch) nach Auswertung der empfangenen Signalisierung angezeigt. Vorteilhafterweise wird an ein Endgerät nach Art eines Pagers, jedoch mit Rückmeldemöglichkeit, gedacht. Bevorzugt soll dies mit den Merkmalen eines Sprachendgeräts kombiniert sein, um Gesprächswünsche direkt übernehmen zu können.

Im folgenden wird die Erfindung anhand eines Ausführungsbeispiels unter Zuhilfenahme der beiliegenden Zeichnung weiter erläutert.
- Fig. 1: zeigt eine graphische Darstellung eines Verbindungsaufbaus nach dem erfindungsgemäßen Verfahren.
- Fig. 2: zeigt das Blockschaltbild eines erfindungsgemäßen Fernmeldeendgeräts.

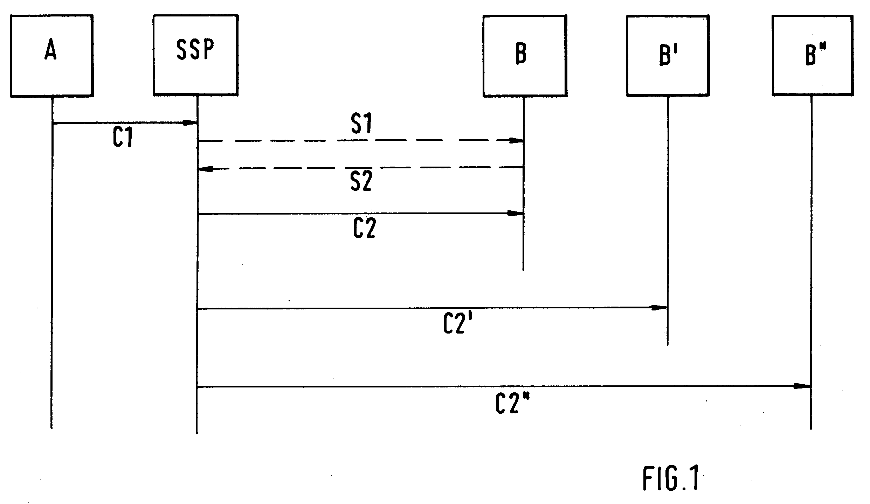

Anhand der Figur 1 wird nun ein Verbindungsaufbau nach dem erfindungsgemäßen Verfahren zur Anrufleitung beschrieben. Dabei wird die hierfür übliche Darstellung verwendet, bei der vom rufenden Teilnehmer links zum gerufenen Teilnehmer rechts in einer von oben nach unten fortschreitenden Weise eine Verbindung aufgebaut wird. Vereinfachend wird dabei nicht berücksichtigt, daß in der Regel noch weitere Einrichtungen zwischengeschaltet sind und daß die einzelnen dargestellten Ablaufschritte in weitere Einzelschritte unterteilt sind. Diese vereinfachende Darstellung ist dem Fachmann geläufig. Die Verfeinerung dieser Darstellung hängt vom jeweiligen Einzelfall ab; die Einzelabläufe sind weitgehend vorgegeben und im übrigen im Rahmen fachmännischen Handelns.

Ein Wunsch eines Teilnehmers A nach einer Verbindung mit einem Teilnehmer B wird zunächst einem Service Switching Point SSP gemeldet, wozu eine Rufverbindung C1 zu diesem aufgebaut wird. In vielen Fällen wird zunächst nur eine Signalisierungsverbindung aufgebaut und erst am Ende der Vermittlungsaufbauprozedur die komplette Rufverbindung, selbstverständlich einschließlich der Gegenrichtung, aufgebaut werden. Der Service Switching Point SSP ist hier angenommenermaßen in der Vermittlungsstelle des Teilnehmers A.

Vom Service Switching Point SSP wird nun dem gewünschten Teilnehmer B mittels einer Signalisierungsverbindung S1 mitgeteilt, daß ein Verbindungswunsch des Teilnehmers A für ihn vorliegt. Dieser Verbindungswunsch wird nun an seinem Endgerät B oder, wenn er mehrere Endgeräte besitzt, an dem zu diesem Zweck erfindungsgemäß ausgestalteten Endgerät B angezeigt. (Hier wird vereinfachend der Teilnehmer als Teilnehmer B als auch sein Endgerät als Endgerät B bezeichnet.) Der gerufene Teilnehmer kann nun im konkreten Einzelfall selbst entscheiden, was mit diesem Verbindungswunsch geschehen soll. Einige Beispiele:
- Das Endgerät B ist ein mobiles Endgerät;
   -- der Teilnehmer B möchte den Ruf an Telefon B' eines Kunden entgegennehmen, den er gerade besucht,
   -- er möchte den Ruf an seinen Anrufbeantworter B'' zuhause oder in seinem Büro leiten lassen; dabei kann gleich im Endgerät B die Nummer des Anrufers A für einen später automatisch aufzubauenden Rückruf gespeichert werden,
   -- er möchte ihn an seinem mobilen Endgerät B direkt entgegennehmen,
- alle Anrufe für den Teilnehmer B, unabhängig davon, ob Fernsprechwunsch, Fax, Bildfernsprechen oder irgendeine andere Diensteart, werden am selben Endgerät B angezeigt und von dort aus einem geeigneten Endgerät, gegebenenfalls unter Zwischenschaltung eines Konverters, zugeteilt; beispielsweise wird ein Bildfernsprechwunsch auf ein Sprachendgerät geleitet und für die Übermittlung etwaiger graphischer Darstellungen im Laufe der Bildfernsprechverbindung wird ein Faxendgerät angegeben und ein Konverter angefordert,
- das Endgerät B ist ein für diesen Dienst geeignetes, jedoch nicht dem Teilnehmer B fest zugeordnetes Endgerät, das jedoch unter Zuhilfenahme einer Chipkarte vorübergehend zumindest unter anderem auch dem Teilnehmer B zugeordnet ist,
- für einige ausgewählte Fälle, die automatisch erkannt werden, ist eine Standardreaktion vorgemerkt; im einfachsten Fall, bei dem das Endgerät B keine Anzeige- und keine Eingabeeinrichtung braucht, kann ausschließlich mit einer Auswahl zwischen zwei oder drei Standardreaktionen gearbeitet werden,
- selbstverständlich kann die Annahme des Anrufs auch abgelehnt werden.

Die Entscheidung des Teilnehmers B wird durch eine Signalisierungsverbindung S2 dem Service Switching Point SSP zurückgemeldet. Dieser veranlaßt nun den Aufbau einer Rufverbindung C2, C2' oder C2'', je nach Entscheidung des Teilnehmers B.

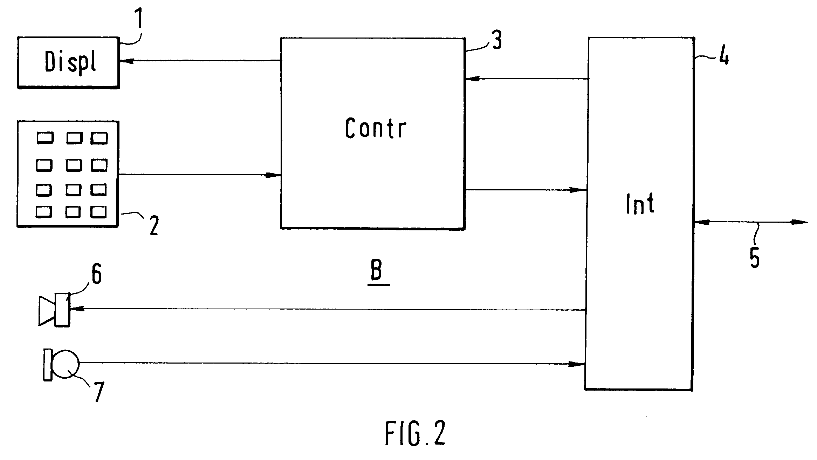

Anhand der Figur 2 wird kurz der Aufbau eines geeigneten Fernmeldeendgeräts B beschrieben. Figur 2 zeigt eine Anzeigeeinrichtung 1, als Displ bezeichnet, eine Eingabeeinrichtung 2, eine Steuer- und Auswerteeinrichtung 3, als Contr bezeichnet, eine Sende- und Empfangseinrichtung 4 als Interface Int zum Fernmeldenetz, eine symbolische Verbindungsleitung 5 zum Fernmeldenetz, sowie einen Lautsprecher 6 und ein Mikrofon 7. Lautsprecher 6 und Mikrofon 7 oder auch eine übliche Hör-Sprech-Garnitur sind hier nur fakultativ.

Die Sende- und Empfangseinrichtung 4 ist beispielsweise eine ISDN-Schnittstelle, die den Signalisierungskanal (D-Kanal) der Steuer- und Auswerteeinrichtung 3 bidirektional zur Verfügung stellt. Einer der bei ISDN zwei Sprachkanäle (B-Kanäle) ist in der einen Richtung mit dem Lautsprecher 6, in der anderen Richtung mit dem Mikrofon 7 verbunden. Die Steuer- und Auswerteeinrichtung 3 ist mit der Anzeigeeinrichtung 1 und der Eingabeeinrichtung 2 verbunden. Abgesehen von der Funktion, insbesondere der Steuer- und Auswerteeinrichtung 3, ist dies ein normales Fernsprechendgerät. Dies kann sowohl stationär (Telefon) als auch tragbar oder mobil (GSM) sein. Man könnte es auch, wenn Lautsprecher 6 und Mikrofon 7, sowie die zugehörigen Teile in der Sende- und Empfangseinrichtung 4 weggelassen sind, als Pager mit Rückmeldemöglichkeit ansehen.

Ein herkömmliches Fernmeldeendgerät wird entweder für ankommende Rufe die Anzeigeeinrichtung aktivieren oder für abgehende Rufe, z.B. durch Abheben des Handapparats, die Eingabeeinrichtung. Erfindungsgemäß wird nun zusätzlich bei ankommenden Rufen, d. h. durch den Empfang von Signalisierungsdaten, die Steuer- und Auswerteeinrichtung 3 eine Aktivierung durchführen, durch die überhaupt erst mittels der Eingabeeinrichtung 2 das Senden von Signalisierungsdaten, und damit von Zielinformation möglich ist.

Die Steuer- und Auswerteeinheit 3 ist selbstverständlich auch dafür verantwortlich, aus den empfangenen Signalisierungsdaten die Information für den Benutzer geeignet aufzubereiten und umgekehrt die vom Benutzer eingegebene (Ziel-) Information in zu sendende Signalisierungsdaten umzusetzen.

Hierzu gehört vor allem, die Teilnehmernummer des Anrufers (in an sich bekannter Weise) aus den empfangenen Signalisierungsdaten auszufiltern und als Ziffernfolge zur Anzeige zu bringen. Eine benutzerlesbare Anzeige der Diensteart, z.B. Fax G3, ist in vielen Fällen erforderlich. Vorteilhafterweise soll auch aus den empfangenen Signalisierungsdaten Information mit vorgegebenem Inhalt erkannt werden. Beispielsweise kann der Anruf von Bekannten, die vorab eingegeben wurden, durch Namensnennung angezeigt werden. Für solche Anrufe kann auch eine vorgegebene Reaktion, z.B. sofortiges Durchschalten auf den angeschlossenen Telefonteil, als automatische Reaktion der Steuer- und Auswerteeinheit vorgesehen sein. Wie schon erwähnt, kann das Endgerät auf solche Standardreaktionen beschränkt sein.

## Patentansprüche

1. Verfahren zur Anruflenkung, bei dem für alle an einen bestimmten Teilnehmer (B) gerichteten Anrufe (C1) zunächst durch Austausch von Signalisierungsdaten (S1, S2) Zielinformation abgerufen wird, die auf Vorgaben des gerufenen Teilnehmers beruht und bei dem nach Erhalt der Zielinformation auf dieser aufbauend die Vermittlung dieser Anrufe zu einem ersten Fernmeldeendgerät (B, B', B'') hin veranlaßt wird, **dadurch gekennzeichnet,** daß die Vorgaben zur Ermittlung der Zielinformation anrufsindividuell mittels eines diesem Teilnehmer zugeordneten zweiten Fernmeldeendgeräts (B) erfolgen.

2. Verfahren nach Anspruch 1, dadurch gekennzeichnet, daß das zweite Fernmeldeendgerät diesem Teilnehmer dauernd zugeordnet ist.

3. Verfahren nach Anspruch 1, dadurch gekennzeichnet, daß das zweite Fernmeldeendgerät durch Meldung an eine Zentrale diesem Teilnehmer vorübergehend zugeordnet wird.

4. Fernmeldeendgerät (B), mit einer Einrichtung (4) zum Empfang von Signalisierungsdaten aus einem Fernmeldenetz, mit einer Einrichtung (4) zum Senden von Signalisierungsdaten zum Fernmeldenetz, und mit einer Steuer- und Auswerteeinrichtung (3), die so ausgestaltet ist, daß sie durch den Empfang von Signalisierungsdaten zum Senden von Signalisierungsdaten aktiviert wird und solche Signalisierungsdaten sendet, die auf Zielinformation zurückgeht, die auf Vorgaben des Benutzers des Fernmeldeendgeräts beruht.

5. Fernmeldeendgerät (B) nach Anspruch 4, dadurch gekennzeichnet, daß es eine Anzeigeeinrichtung (1) zum Anzeigen von Information, die aus empfangenen Signalisierungsdaten gewonnen ist und eine Eingabeeinrichtung (2) zum Eingeben von Information, aus der zu sendende Signalisierungsdaten gewonnen werden, aufweist und daß die Steuer- und Auswerteeinrichtung (3) so ausgestaltet ist, daß sie die anzuzeigende Information aus den empfangenen Signalisierungsdaten gewinnt und daß sie die zu sendenden Signalisierungsdaten aus der eingegebenen Information gewinnt.

6. Fernmeldeendgerät nach Anspruch 5, dadurch gekennzeichnet, daß die Steuer- und Auswerteeinrichtung (3) derart ausgestaltet ist, daß sie aus den empfangenen Signalisierungsdaten Information über Art und Herkunft eines Anrufswunsches gewinnt und anzeigt.

7. Fernmeldeendgerät nach Anspruch 4, dadurch gekennzeichnet, daß die Steuer- und Auswerteeinrichtung (3) derart ausgestaltet ist, daß sie aus den empfangenen Signalisierungsdaten Information mit vorgegebenem Inhalt, insbesondere Anrufe von vorab bestimmten Anrufern, erkennt und darauf in vorgegebener Weise, insbesondere durch Senden entsprechender Signalisierungsdaten reagiert.

8. Fernmeldeendgerät nach Anspruch 4, dadurch gekennzeichnet, daß es Einrichtungen (4) zum Senden und Empfangen von Nutzinformation und zu deren Eingabe (7) und Ausgabe (6) aufweist, insbesondere daß es als Fernsprechendgerät ausgebildet ist, und daß die Steuer- und Auswerteeinrichtung (3) so ausgebildet ist, daß die Vermittlung eines signalisierten Anrufs auf dieses Fernmeldeendgerät (B) veranlaßt werden kann.
